# EUROPEAN PATENT SPECIFICATION

(11) **EP 4 301 587 B1**
(45) Date of publication and mention of the grant of the patent: **14.10.2026**
(21) Application number: 21778455.2
(22) Date of filing: 20.09.2021
(51) Int. Cl.: B29C 70/52, B29C 70/54

(54) **A METHOD FOR PREPARING A PULTRUDED POLYURETHANE COMPOSITE**
VERFAHREN ZUR HERSTELLUNG EINES PULTRUDIERTEN POLYURETHANVERBUNDSTOFFS
PROCÉDÉ DE PRÉPARATION D'UN COMPOSITE DE POLYURÉTHANE PULTRUDÉ

(30) Priority: 25.09.2020 CN 202011028936; 09.11.2020 EP 20206344
(43) Date of publication of application: 10.01.2024
(73) Proprietor: Covestro Deutschland AG, 51373 Leverkusen (DE)
(72) Inventor: WU, Frank, Shanghai, 201206 (CN); GU, Yongming, Shanghai, 201208 (CN); LI, Zhijiang, Shanghai, 201318 (CN)
(74) Representative: Levpat
(86) International application number: PCT/EP2021/075745
(87) International publication number: WO 2022/063711

(56) References cited:
- JP-A- 2003 245 985
- US-A1- 2013 115 412

## Description

### Technical field

The present invention belongs to the field of polyurethane pultrusion technology. Specifically, the present invention relates to a method and a device for preparing a pultruded polyurethane composite by a polyurethane pultrusion process.

### Prior Art

Pultruded composites have received attention in the industry due to the characteristics of high fiber content, uniform quality, and the like. The pultrusion process is widely used because it is simple and efficient, and can achieve continuous production. The general operation procedure of the pultrusion process comprises: continuously drawing the fiber yarns or the fiber fabrics from the creel; and conducting resin infiltration by an open dipping tank or a closed infiltration box; placing the fibers, after being infiltrated by the resin, into a mold which maintains a certain cross-sectional shape for heating and curing; then continuously pulling out of the mold by a traction device, and finally cutting in a desired length in-line to obtain the corresponding composites.

Conventional pultrusion is mainly carried out in an open dipping method. In such method, fibers, fabrics or felts pass through a dipping tank with a pressure roller or a pressure rod. After the fibers with the resin are squeezed stepwise by a preforming plate, they are placed in a heated mold and then cured. Conventional open dipping methods have a series of problems such as high VOC (volatile organic compound) volatilization, high resin waste and high porosity content of finished products. In addition, it takes a long time to shut down and change product specifications, and the costs are relatively high.

In addition, the current pultruded polyurethane composites have typically smooth surfaces, which cannot meet the requirements for polyurethane products in which surfaces with certain roughness are necessary so that they can be further processed or jointed. Adding a peel ply can help improve the surface roughness, which is more beneficial for various applications.

The use of peel plies for this purpose is for example disclosed in WO 2020/207905 A and in JP 2003245985 A. These conventional methods however do not include an extra drying step of the peel ply apart from the drying / curing step in the heated die which results in non-satisfying surface qualities.

US20130115412A discloses a fiber reinforced composite laminate with fibers generally oriented along two major axes and having a polyurethane resin matrix suitable for reinforcing wood based substrates such as trailer/container flooring, glulams, plywood, particle boards, laminated veneer lumber, and oriented strand board.

CN110239115A discloses a pultrusion process for plates of turbine blades, the plates of turbine blades and the turbine blades. It relates to the field of plates of turbine blades. The pultrusion process for plates of turbine blades comprises: drawing the silvalin using a traction device through a yarn guide into a resin tank to be infiltrated with resin; drawing the peel ply using a traction device through a cutting device to cut the peel ply; forming through-holes with the desired shape on the surface of the peel ply; covering the silvalin, which is infiltrated sufficiently with resin, by the cut peel ply; curing the resultant in a heating mold to obtain a textured reinforced plate for producing turbine blades; and cutting the obtained plate as desired.

CN108995251A discloses a production process of a carbon fiber pultrusion board suitable for girders of wind turbine blades and relates to the field of wind turbine blade production. The production process is carried out in that after carbon fibers are impregnated with resin, the carbon fibers are solidified in a mold and are subjected to continuous pultrusion so as to be made into a pultrusion board; a bonding material is compounded to the surface of the pultrusion board; end parts of the pultrusion board are cut and ground as needed so as to make the two ends of the pultrusion board chamfered; and the chamfers are wrapped with a bubble film, and the pultrusion board is wound and transported.

Despite the above disclosures, there is an urgent need in the industry for improved processes and corresponding devices to meet requirements on surface quality of pultruded polyurethane composites for different applications, meanwhile improving production efficiency, and adapting to the demand for energy saving, emission reduction, and environmental friendliness.

### Summary of the invention

One aspect of the present invention is to provide a method for preparing a pultruded polyurethane composite, comprising:
covering at least a part of at least a fibrous reinforcing material (1) with at least a peel ply (2);
infiltrating the fibrous reinforcing material (1) with a polyurethane composition;
drawing the infiltrated fibrous reinforcing material (1) and the peel ply (2) through a mold (6), and
curing to obtain the pultruded polyurethane composite;
wherein the method further comprises drying the at least a peel ply (2) before or after covering at least a part of the at least a fibrous reinforcing material (1) with the at least a peel ply (2) and before infiltrating the fibrous reinforcing material (1) with a polyurethane composition.

Preferably, the method further comprises drying the at least a peel ply (2) and the fibrous reinforcing material (1) together after covering at least a part of the at least a fibrous reinforcing material (1) with the at least a peel ply (2).

Preferably, the drying is carried out by at least a drying unit (22).

Preferably, the drying unit (22) includes two heating layers (22m, 22n) of a two-layer sandwich heater. During drying by heating, the peel ply (2) is located between the two heating layers (22m, 22n).

Preferably, the drying unit (22) is composed of two hot pressing rollers (22i, 22j). During drying by heating, the peel ply (2) is located between the two hot pressing rollers (22i, 22j). An electric heating wire is arranged in each hot pressing roller to heat up the hot pressing roller, wherein the temperature is the preset temperature for drying, so that the peel ply is quickly dried when it passes between the two hot pressing rollers.

Preferably, the drying temperature is of 50-230°C, preferably 70-180°C.

Preferably, the method further comprises a step of cooling after drying, including natural cooling in the air or cooling by various cooling techniques for the peel ply.

Preferably, the cooling is carried out in a cooling unit (33).

Preferably, the cooling temperature is of 10-60°C, preferably 15-25°C.

Preferably, the peel ply passes through an insulation component (G, 22YG) after drying and before cooling. The material of the insulation component (G, 22YG) is selected from asbestos, rock wool or temperature-resistant plastic. The insulation component (G, 22YG) is connected with the drying unit by matching in terms of the shape and cross-sectional size.

Preferably, the peel ply is selected from nylon peel plies, polyester peel plies or mixtures thereof, preferably nylon peel plies.

Preferably, the peel ply is selected from plain weave fabrics, twill weave fabrics, satin weave fabrics made by a continuous fiber weaving method, fabrics made by a knitting method or fabrics made directly by a stitching method.

Preferably, the method further comprises drawing the peel ply out from a peel ply container (2K, 2K') before drying. The peel ply container (2K, 2K') includes a spool for winding and unwinding the peel ply. The shape of the peel ply container (2K, 2K') is preferably cylindrical. The peel ply container (2K, 2K') refers to a component that can hold and carry the peel ply and can be a holder, such as a holder with a spool, or a vessel, such as a vessel with a spool.

Preferably, the drying unit (22) is at least a drying box (22Y). The drying box (22Y) is provided with an inlet (22Ya) and an outlet (22Yb), through which the peel ply (2) can pass.

Preferably, the drying box (22Y) includes a heating part (22Ym), a cooling part (22Yn) and an insulation component (22YG) arranged between the heating part (22Ym) and the cooling part (22Yn).

Preferably, the at least a peel ply (2) comprises two peel plies (2, 2'). The drying refers to drying of the two peel plies respectively by two drying units (22, 22').

Preferably, the cross-sectional shape of the drying unit (22, 22') is selected from rectangle, circle, square and ellipse.

Preferably, the length of the drying unit (22, 22') is of 0.05-5 m, preferably 0.3-2 m.

Preferably, the cooling refers to cooling of the dried peel plies (2, 2') respectively by two cooling units (33, 33').

Preferably, the drying method is one, two or more selected from drying by device heating, drying by electric blanket heating, drying by electric film heating, drying by microwave, drying under vacuum, drying by infrared heating and drying by hot air heating.

Preferably, the fibrous reinforcing material (1) is partially covered by the peel ply. The fibrous reinforcing material (1) is infiltrated with a polyurethane composition via the part of the fibrous reinforcing material (1) not covered by the peel ply (2).

Preferably, the polyurethane composition comprises the following components:
a component A, comprising one or more organic polyisocyanates;
a component B, comprising:
   B1) one or more organic polyols in an amount of 10-65 wt.%, preferably 21-55 wt.%, based on the total weight of the polyurethane composition as 100 wt.%;
   B2) one or more compounds with the structure of formula (I) in an amount of 0-35 wt.%, preferably 3.4-35 wt.%, based on the total weight of the polyurethane composition as 100 wt.%, 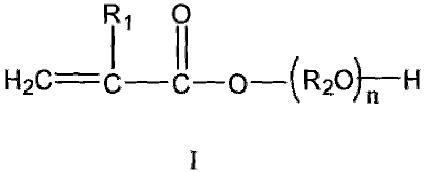
   wherein, R1 is selected from hydrogen, methyl or ethyl; R2 is selected from alkylene groups having 2-6 carbon atoms, propylene-2,2-di(4-phenylene), 1,4-xylylene, 1,3-xylylene, 1,2-xylylene; and n is an integer selected from 1-6; and
a component C, a free radical initiator.

Preferably, the at least a peel ply (2) comprises two peel plies (2, 2'), which are located on two opposite inner sides (5i, 5j) of the infiltration box (5) respectively. The fibrous reinforcing material (1) is located between the two peel plies (2, 2'). The injection unit (4) comprises at least two injection ports (4a, 4b), which are located on two opposite sides (5m, 5n) of the infiltration box (5), on which no peel ply is placed.

The second aspect of the present invention is to provide a device for use in the aforementioned method for preparing a pultruded polyurethane composite of the present invention, comprising at least a drying unit (22). The drying unit (22) is provided with an inlet (22a) and an outlet (22b), through which the peel ply (2) passes. The infiltration box (5) includes an inlet (5a) and an outlet (5b).

Preferably, the device comprises two drying units (22, 22'). The two drying units (22, 22') include an inlet (22a, 22'a) and an outlet (22b, 22'b) respectively.

Preferably, the device further comprises an injection unit (4) and an infiltration box (5). The infiltration box (5) includes an inlet (5a) and an outlet (5b). The outlets (22b, 22'b) of the drying units are arranged respectively close to or tight with the inlet (5a) of the infiltration box (5) in the pultrusion direction.

Preferably, the drying unit (22) includes two heating layers (22m, 22n) of a two-layer sandwich heater. During drying by heating, the peel ply (2) is located between the two heating layers (22m, 22n).

Preferably, the drying unit (22) is composed of two hot pressing rollers (22i, 22j). During drying by heating, the peel ply (2) is located between the two hot pressing rollers (22i, 22j). An electric heating wire is arranged in each hot pressing roller to heat up the hot pressing roller, wherein the temperature is the preset temperature for drying, so that the peel ply is quickly dried when it passes between the two hot pressing rollers.

Preferably, the device further comprises at least a peel ply container (2K). The peel ply container (2K) includes a spool for winding and unwinding the peel ply. The shape of the peel ply container (2K) is preferably cylindrical.

Preferably, the cross-sectional shape of the drying unit (22, 22') is selected from rectangle, square and ellipse.

Preferably, the device further includes at least a cooling unit (33).

Preferably, at least an insulation component (G) is further provided between the drying unit (22) and the cooling unit (33). The drying unit (22, 22'), the cooling unit (33, 33') and the insulation component (G, G') are independent of each other, and can be connected in series with each other, or used separately and independently. Such a setting can adjust the use of various components economically, conveniently and quickly according to the needs of different environments, different processes and different products.

Preferably, the drying unit (22) is at least a drying box (22Y). The drying box (22Y) is provided with an inlet (22Ya) and an outlet (22Yb), through which the peel ply (2) can pass.

Preferably, the drying box (22Y) includes a heating part (22Ym), a cooling part (22Yn) and an insulation component (22YG) arranged between the heating part (22Ym) and the cooling part (22Yn). The drying box (22Y) is namely a drying unit (22) that includes a heating part (22Ym), an insulation component (22YG) and a cooling part (22Yn).

Preferably, the at least a peel ply (2) comprises two peel plies (2, 2'). The drying refers to drying of the two peel plies respectively by two drying units (22, 22').

Preferably, the cross-sectional shape of the drying unit (22, 22') is selected from rectangle, square, ellipse and circle.

Preferably, the length of the drying unit (22, 22') is of 0.05-5 m, preferably 0.3-2 m.

Preferably, the cooling refers to cooling of the dried peel plies (2, 2') respectively by two cooling units (33, 33'). The two cooling units (33, 33') include an inlet (33a, 33'a) and an outlet (33b, 33'b) respectively. The inlets (33a, 33'a) of the cooling units are connected with one of the two insulation components (22 YG, 22' YG) respectively.

Preferably, the outlet (33b, 33'b) of the cooling unit is tightly connected with the inlet (5a) of the infiltration box in the pultrusion direction. The outlet of the cooling unit is tightly connected with the inlet of the infiltration box with a very small distance, so that the contact with the air moisture can be avoided.

Preferably, the injection unit (4) comprises at least two injection ports (4a, 4b), which are located on two opposite sides (5m, 5n, or 5i, 5j) of the infiltration box (5).

Preferably, the at least a peel ply (2) comprises two peel plies (2, 2'), which are located on two opposite inner sides (5i, 5j) of the infiltration box (5) respectively. The fibrous reinforcing material (1) is located between the two peel plies (2, 2'). The injection unit (4) comprises at least two injection ports (4a, 4b), which are located on two opposite sides (5m, 5n) of the infiltration box (5), on which no peel ply is placed.

Preferably, the infiltration box (5) is cuboid. The injection ports (4a, 4b) are located on two sides (5m, 5n) of the infiltration box perpendicular to the horizontal plane.

Preferably, the injection unit (4) further comprises at least one injection channel (4i), which communicates with the injection ports (4a, 4b).

Preferably, there are at least two openings (4ia, 4ib) or a slit (4ic) on the injection channel (4i). The diameter of the openings is of 0.5-5 mm, preferably 1-4 mm, more preferably 1.5-3 mm.

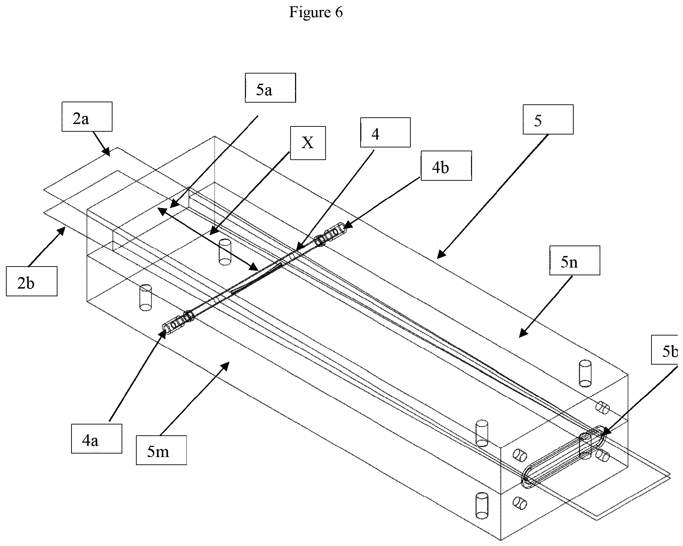

Preferably, the distance between the injection unit (4) and the inlet of the infiltration box (5) in the pultrusion direction is of 20-250mm, preferably 30-200mm, more preferably 50-190mm. As shown in Figure 6, X represents the distance between the injection unit (4) and the inlet (5a) of the infiltration box in the pultrusion direction.

Preferably, the center distance of the two farthest openings (4ia, 4ib) among said openings is of 5%-90%, preferably 10%-80%, more preferably 15%-70% of that of the injection channel. The width of the slit is of 0.5-4mm, preferably 1-3mm. The length of the slit (4ic, 4id) is of 5%-90%, preferably 10%-80%, more preferably 15%-70% of that of the injection channel (4i). Such a setting can make the fibrous reinforcing material get better and appropriate infiltration.

Preferably, the ratio of the cross-sectional area of the inlet (5a) to that of the outlet (5b) of the infiltration box is of 2:1-10:1, more preferably 3:1-8:1. The inlet (5a) refers to the opening through which the fibrous reinforcing material and the peel ply enter the infiltration box in the pultrusion direction, and the outlet (5b) refers to the opening through which the fibrous reinforcing material and the peel ply are pulled out.

An aspect of the disclosure is to provide a pultruded polyurethane composite, which is prepared by the aforementioned method for preparing a pultruded polyurethane composite of the present invention.

Another aspect of the present disclosure is to provide a polyurethane product comprising the polyurethane composite obtained by the aforementioned method for preparing a pultruded polyurethane composite of the present invention.

Preferably, the polyurethane product is selected from cable trays, curtain wall frames of doors and windows, ladder frames, tent poles or pipes, anti-glare boards, floors, sucker rods, telegraph poles and cross arms, guardrails, grilles, profiles for buildings, profiles and plates for containers, bicycle racks, fishing poles, cable cores, insulator core rods, radomes, single-layer or sandwich continuous plates, or sheets for manufacturing girders of turbine blades.

By means of repeated experiments, unexpectedly, it is found that the method for preparing a pultruded polyurethane composite including drying of the present invention can simply and efficiently prepare pultruded polyurethane composites with satisfactory quality and meeting requirements on non-smooth or rough surfaces, meanwhile greatly reduce or even eliminate the blisters on the surfaces of the pultruded polyurethane composites and obtain products of better quality. By using the device comprising an injection unit and an infiltration box of the present invention, the fibrous reinforcing material can be infiltrated well in the presence of a peel ply, thereby providing a high-quality pultruded polyurethane composite with uniform resin distribution and good curing. Particularly unexpectedly, due to the injection unit and the infiltration box with special structures (such as the injection ports and the injection channel) of the present invention, as well as their corresponding positions and connections and/or the corresponding processes, the effect and efficiency of infiltration can be improved greatly, thereby not only providing a pultruded polyurethane composite with desired surfaces, and also improving production efficiency, saving raw materials and reducing costs.

Especially for fibrous reinforcing materials with a certain thickness, the method of the present invention can achieve good infiltration and at the same time produce a pultruded polyurethane composite with satisfactory surface properties.

By using the device comprising an injection unit and an infiltration box of the present invention, the fibrous reinforcing material can be infiltrated well in the presence of a peel ply, thereby providing a high-quality pultruded polyurethane composite with uniform resin distribution, good curing and excellent surface conditions.

By the method for preparing a polyurethane composite of the present invention by a polyurethane pultrusion process, in which the polyurethane composition as described above is used and the drying method, the drying unit, the cooling method, cooling unit, the injection unit and the infiltration box are ingeniously designed for the composition, the surface conditions of the polyurethane pultrusion composite are improved, and production efficiency is improved and costs are reduced.

In addition, the polyurethane composition of the present disclosure has a longer gel time and thus better pultrusion of the polyurethane can be achieved. The polyurethane composite of the present invention has excellent physical properties and high glass fiber content.

Moreover, the polyurethane composition of the present invention has a shorter curing time and a longer gel time, so that it is better and more flexible (for example in terms of infiltration and molding for a longer time) to be used for preparing pultruded polyurethane composites, especially large-scaled pultruded polyurethane composites, such as profiles for girders of wind blades or for wind blades. Specifically, the fibrous reinforcing material can be better infiltrated and molded for a longer time at room temperature, for example, before entering the mold, and can be cured faster at high temperature, for example, after entering the mold.

### Embodiments

The specific embodiments of the present invention will be described below.

The method for preparing a pultruded polyurethane composite of the present invention comprises:
covering at least a part of at least a fibrous reinforcing material (1) with at least a peel ply (2);
infiltrating the fibrous reinforcing material (1) with a polyurethane composition;
drawing the infiltrated fibrous reinforcing material (1) and the peel ply (2) through a mold (6), and
curing to obtain the pultruded polyurethane composite;
wherein the method further comprises drying the at least a peel ply (2) before or after covering at least a part of the at least a fibrous reinforcing material (1) with the at least a peel ply (2) and before infiltrating the fibrous reinforcing material (1) with a polyurethane composition.

Preferably, the method further comprises drying the at least a peel ply (2) and the fibrous reinforcing material (1) together after covering at least a part of the at least a fibrous reinforcing material (1) with the at least a peel ply (2).

Preferably, the drying is carried out by at least a drying unit (22).

Preferably, the drying unit (22) includes two heating layers (22m, 22n) of a two-layer sandwich heater. During drying by heating, the peel ply (2) is located between the two heating layers (22m, 22n).

Preferably, the drying unit (22) is composed of two hot pressing rollers (22i, 22j). During drying by heating, the peel ply (2) is located between the two hot pressing rollers (22i, 22j). An electric heating wire is arranged in each hot pressing roller to heat up the hot pressing roller, wherein the temperature is the preset temperature for drying, so that the peel ply is quickly dried when it passes between the two hot pressing rollers.

Preferably, the drying temperature is of 50-230°C, preferably 70-180°C.

Preferably, the method further comprises a step of cooling after drying, including natural cooling in the air or cooling by various cooling techniques for the peel ply.

Preferably, the cooling is carried out in a cooling unit (33).

Preferably, the cooling temperature is of 10-60°C, preferably 15-25°C.

Preferably, the peel ply passes through an insulation component after drying and before cooling. The material of the insulation component is selected from asbestos, rock wool or temperature-resistant plastic. The insulation component is connected with the drying unit by matching in terms of the shape and cross-sectional size.

Preferably, the peel ply is selected from nylon peel plies, polyester peel plies or mixtures thereof, preferably nylon peel plies.

Preferably, the peel ply is selected from plain weave fabrics, twill weave fabrics, satin weave fabrics made by a continuous fiber weaving method, fabrics made by a knitting method or fabrics made directly by a stitching method.

Preferably, the method further comprises drawing the peel ply out from a peel ply container (2K) before drying. The peel ply container (2K) includes a spool for winding and unwinding the peel ply. The shape of the peel ply container (2K) is preferably cylindrical.

Preferably, the drying unit (22) is at least a drying box (22Y). The drying box (22Y) is provided with an inlet (22Ya) and an outlet (22Yb), through which the peel ply (2) can pass.

Preferably, the drying box (22Y) includes a heating part (22Ym), a cooling part (22Yn) and an insulation component (22YG) arranged between the heating part (22Ym) and the cooling part (22Yn).

Preferably, the at least a peel ply (2) comprises two peel plies (2, 2'). The drying refers to drying of the two peel plies respectively by two drying units (22, 22').

Preferably, the cross-sectional shape of the drying unit (22, 22') is selected from rectangle, circle, square and ellipse.

Preferably, the length of the drying unit (22, 22') is of 0.05-5 m, preferably 0.3-2 m.

Preferably, the cooling refers to cooling of the dried peel plies (2, 2') respectively by two cooling units (33, 33').

Preferably, the drying method is one, two or more selected from drying by unit heating, drying by electric blanket heating, drying by electric film heating, drying by microwave, drying under vacuum, drying by infrared heating and drying by hot air heating.

Preferably, the at least a peel ply (2) comprises two peel plies (2, 2'), which are located on two opposite inner sides (5i, 5j) of the infiltration box (5) respectively. The fibrous reinforcing material (1) is located between the two peel plies (2, 2'). The injection unit (4) comprises at least two injection ports (4a, 4b), which are located on two opposite sides (5m, 5n) of the infiltration box (5), on which no peel ply is placed.

In the method for preparing a pultruded polyurethane composite of the present invention, the peel ply and the fibrous reinforcing material are drawn through the infiltration box at a certain speed by a continuous pultrusion process. A polyurethane composition is injected into the infiltration box by the injection unit to infiltrate the fibrous reinforcing material. Preferably, a polyurethane composition is injected via the part of the fibrous reinforcing material (1) not covered by the peel ply, and infiltrates the fibrous reinforcing material (1) . The speed at which the infiltrated fibrous reinforcing material and the peel ply are drawn through the mold is of 0.2-2 m/min, preferably 0.2-1.5 m/min. The speed for injecting the polyurethane composition is of 30-2000 g/min, preferably 40-1500 g/min, more preferably 60-1200 g/min. Surprisingly, the method of the present invention characterized by the peel ply, the proper injection ports, the infiltration process, the suitable speed for drawing and the speed for injecting the polyurethane composition can achieve good infiltration without wasting time and raw materials. It not only provides a high-quality pultruded polyurethane composite with satisfactory surfaces, but also improves production efficiency and saves costs.

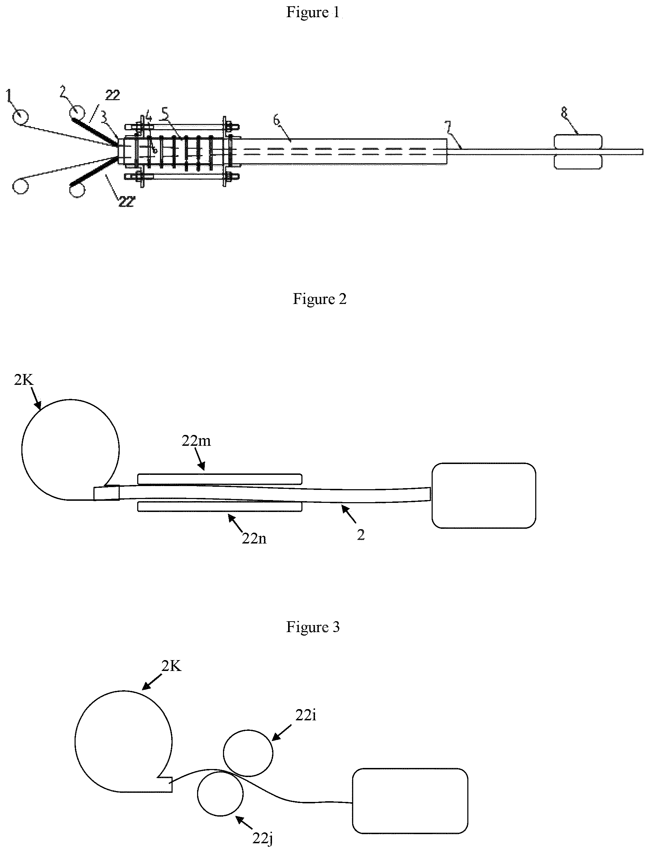

Preferably, the distance between the injection unit (4) and the inlet (5a) of the infiltration box in the pultrusion direction is of 20-250mm, preferably 30-200mm, more preferably 50-190mm. As shown in Figure 2, X represents the distance between the injection unit (4) and the inlet (5a) of the infiltration box in the pultrusion direction.

Preferably, the polyurethane composition comprises the following components:
a component A, comprising one or more organic polyisocyanates;
a component B, comprising:
   B1) one or more organic polyols in an amount of 10-65 wt.%, preferably 21-55 wt.%, based on the total weight of the polyurethane composition as 100 wt.%;
   B2) one or more compounds with the structure of formula (I) in an amount of 0-35 wt.%, preferably 3.4-35 wt.%, based on the total weight of the polyurethane composition as 100 wt.%, 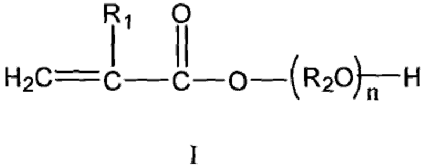
   wherein, R1 is selected from hydrogen, methyl or ethyl; R2 is selected from alkylene groups having 2-6 carbon atoms, propylene-2,2-di(4-phenylene), 1,4-xylylene, 1,3-xylylene, 1,2-xylylene; and n is an integer selected from 1-6; and
a component C, a free radical initiator.

According to the present invention, there is no limitation on the shape and size of the fibrous reinforcing material. For example, it may be continuous fibers, fiber webs formed by bonding, or fiber fabrics.

In some embodiments of the present invention, the fibrous reinforcing material is selected from glass fibers, carbon fibers, polyester fibers, natural fibers, aramid fibers, nylon fibers, basalt fibers, boron fibers, silicon carbide fibers, asbestos fibers, whiskers, metal fibers or combinations thereof.

Optionally, the organic polyisocyanate can be any aliphatic, cycloaliphatic or aromatic isocyanate known to be used in the preparation of polyurethanes. Examples include, but are not limited to, toluene diisocyanate (TDI), diphenylmethane diisocyanate (MDI), polyphenylene polymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethylxylylene diisocyanate (TMXDI) and their polymers or combinations thereof. The functionality of the isocyanate usable for the present invention is preferably of 2.0-3.5, particularly preferably 2.1-2.9. The viscosity of the isocyanate usable for the present invention is preferably of 5-700 mPa·s, particularly preferably 10-300 mPa·s, measured at 25°C according to DIN 53019-1-3.

According to the present invention, the organic polyisocyanates include isocyanate dimers, trimers, tetramers, pentamers, or combinations thereof.

In a preferable embodiment of the present invention, the isocyanate of the component A is selected from diphenylmethane diisocyanate (MDI), polyphenylene polymethylene polyisocyanate (pMDI), and their polymers, prepolymers or combinations thereof.

A blocked isocyanate can also be used as the isocyanate of the component A. It can be prepared by reacting excess of an organic polyisocyanate or a mixture thereof with a polyol compound. Those skilled in the art are familiar with these compounds and their preparation methods.

The polyurethane composition of the present disclosure comprises one or more organic polyols B1).

The amount of the organic polyol is of 21-60 wt.%, based on the total weight of the polyurethane composition as 100 wt.%. The organic polyol may be an organic polyol commonly used for preparing polyurethanes in the art, including but not limited to, polyether polyols, polyether carbonate polyols, polyester polyols, polycarbonate diols, polymer polyols, vegetable oil-based polyols or combinations thereof.

The polyether polyol can be prepared by a known process, for example, by reacting an olefin oxide with a starter in the presence of a catalyst.

According to the present invention, the vegetable oil-based polyol includes vegetable oils, vegetable oil polyols or modified products thereof. The vegetable oil is a compound prepared from unsaturated fatty acids and glycerol, or fat or oil extracted from plant fruits, seeds, and germs, which is preferably, but not limited to, peanut oil, soybean oil, linseed oil, castor oil, rapeseed oil, and palm oil. The vegetable oil polyol is a polyol starting from one or more vegetable oils. The starter for the synthesis of vegetable oil polyols includes, but is not limited to, soybean oil, palm oil, peanut oil, canola oil, and castor oil. Hydroxyl groups can be introduced into the starter for the vegetable oil polyol via a process such as cracking, oxidation or transesterification, and then the corresponding vegetable oil polyol can be prepared by a process for preparing organic polyols well known to those skilled in the art.

Methods for measuring the hydroxyl value are well known to those skilled in the art and are disclosed, for example, in Houben Weyl, Methoden der Organischen Chemie, vol. XIV/2 Makromolekulare Stoffe, p. 17, Georg Thieme Verlag; Stuttgart 1963.

As used herein, the functionality and hydroxyl value of organic polyols refer to average functionality and average hydroxyl value respectively, unless otherwise indicated.

Optionally, the polyurethane composition of the present invention further comprises one or more compounds B2) having the structure of formula (I) 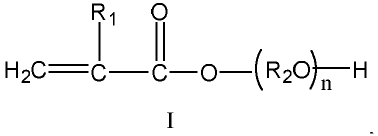 wherein, R₁ is selected from hydrogen, methyl or ethyl; R₂ is selected from alkylene groups having 2-6 carbon atoms; and n is an integer selected from 1-6.

In a preferable embodiment of the present invention, R₂ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, propylene-2,2-di(4-phenylene), 1,4-xylylene, 1,3-xylylene, 1,2-xylylene.

Preferably, B1) is selected from organic polyols having a functionality of 1.7-6, preferably 1.9-4.5, and a hydroxyl value of 150-1100 mg KOH/g, preferably 150-550 mg KOH/g.

In a preferable embodiment of the present invention, the component B2) is selected from hydroxyethyl methacrylate, hydroxypropyl methacrylate, hydroxybutyl methacrylate, hydroxyethyl acrylate, hydroxypropyl acrylate, hydroxybutyl acrylate or combinations thereof.

The compound of formula (I) can be prepared by a method generally used in the art, for example, by esterification reaction of (meth)acrylic anhydride, (meth)acrylic acid or (meth)acryloyl halide with HO-(R₂O)ₙ-H. The preparation method is well known to those skilled in the art, for example, disclosed in "Handbook of Polyurethane Raw Materials and Auxiliaries" (Yijun Liu, published on April 1, 2005), Chapter 3; and "Polyurethane Elastomers" (Houjun Liu, published in August 2012), Chapter 2.

Preferably, the polyurethane composition of the present disclosure further comprises a component C,
a free radical initiator. The free radical initiator used in the present invention can be added to the polyol component or the isocyanate component or both components. The initiator includes, but is not limited to, peroxides, persulfides, peroxycarbonates, peroxyboric acid, azo compounds, or other suitable free radical initiators which can initiate the curing of double bond-containing compounds, examples of which include tert-butyl peroxy isopropyl carbonate, tert-butyl peroxy-3,5,5-trimethylhexanoate, methyl ethyl ketone peroxide, and cumene hydroperoxide. Preferably, the free radical initiator of the present disclosure is present in an amount of 0.1-8 wt.%, based on the total weight of the polyurethane composition of the present disclosure as 100 wt.%. In addition, an accelerator such as a cobalt compound or an amine compound may also be present.

Optionally, the polyurethane composition may further comprise a catalyst for catalyzing the reaction of isocyanate groups (NCO) with hydroxyl groups (OH). Suitable catalysts for polyurethane reaction are preferably, but not limited to, amine catalysts, organometallic catalysts, or mixtures thereof. The amine catalyst is preferably, but not limited to, triethylamine, tributylamine, triethylenediamine, N-ethylmorpholine, N,N,N',N'-tetramethyl-ethylenediamine, pentamethyldiethylene-triamine, N-methylaniline, N,N-dimethylaniline, or a mixture thereof. The organometallic catalyst is preferably, but not limited to, an organotin compound, such as tin (II) acetate, tin (II) octoate, tin ethylhexanoate, tin laurate, dibutyl tin oxide, dibutyl tin dichloride, dibutyl tin diacetate, dibutyl tin maleate, dioctyl tin diacetate, or a mixture thereof. Preferably, the catalyst is present in an amount of 0.001-10 wt.%, based on the total weight of the polyurethane composition of the present disclosure as 100 wt.%.

In an embodiment of the present invention, in the polyaddition reaction of isocyanate groups and hydroxyl groups, the isocyanate groups may be those contained in the organic polyisocyanate (component A), or may also be those contained in the reaction intermediate of the organic polyisocyanate (component A) with the organic polyol (component B1)) or the component B2). The hydroxyl groups may be those contained in the organic polyol (component B1)) or the component B2), or may also be those contained in the reaction intermediate of the organic polyisocyanate (component A) with the organic polyol (component B1)) or the component B2).

In an embodiment of the present invention, the radical polymerization reaction is a polyaddition reaction of ethylenic bonds, wherein the ethylenic bonds may be those contained in the component B2), or may also be those contained in the reaction intermediate of the component B2) with the organic polyisocyanate.

In an embodiment of the present invention, the polyaddition reaction (i.e., the polyaddition reaction of isocyanate groups with hydroxyl groups) for polyurethanes is carried out simultaneously with the radical polymerization reaction. It is well known to those skilled in the art that suitable reaction conditions can be selected, such that the polyaddition reaction for polyurethans and the radical polymerization reaction are carried out in succession. However, the polyurethane matrix thus obtained has a different structure from that of a polyurethane matrix obtained by simultaneous polyaddition reaction for polyurethans and radical polymerization reaction. Thus, the mechanical properties and processability of the prepared polyurethane composites are different.

Generally, the term "gel time" refers to the time from when the component A and B of the reaction system start mixing until the viscosity reaches a certain value (for example, about 10000 mPa.s). The gel time mentioned in the examples of the present disclosure is that measured using a gel tester. Gel time of this disclosure is tested by a gel tester GT-STHP-220 from Shanghai Sen Lan Scientific Instrument Co. Ltd.

By means of repeated experiments, unexpectedly, it is found that the method for preparing a pultruded polyurethane composite including drying of the present invention can simply and efficiently prepare pultruded polyurethane composites with satisfactory quality and meeting requirements on rough surfaces, meanwhile greatly reduce or even eliminate the blisters on the surfaces of the pultruded polyurethane composites. By using the method of the present invention comprising the ingeniously designed drying step, the drying unit, the cooling step, the cooling unit, the insulation component, the injection unit, the infiltration box etc, the fibrous reinforcing material, especially the fiber material with a certain thickness can be infiltrated well in a shorter time, and pultruded polyurethane composites of high quality with surfaces having a certain roughness but without blisters can be produced thereby avoiding waste, saving resources and improving the production efficiency.

In addition, the polyurethane composition of the present disclosure has a shorter curing time and a longer gel time, so that it is better and more flexible (for example in terms of infiltration and molding for a longer time) to be used for preparing pultruded polyurethane composites, especially large-scaled pultruded polyurethane composites. Specifically, the fibrous reinforcing material can be better infiltrated and molded for a longer time at room temperature, for example, before entering the mold, and can be cured faster at high temperature, for example, after entering the mold.

Unexpectedly, it is found that when the injection ports are located on the sides of the infiltration box close to the peel ply (e.g. 5i, 5j in Figure 2), the polyurethane composition contacts firstly with the peel ply upon injection and then with the fibrous reinforcing material via the peel ply, resulting in a poor infiltration effect. When the injection ports are located on the sides of the infiltration box without the peel ply, not close to or far away from the peel ply (e.g., 5m, 5n in Figure 2), a better infiltration effect can be achieved. There is no need to arrange an injection port on the sides of the infiltration box provided with or close to the peel ply. Preferably, the infiltration box have two surfaces with larger area parallel to the horizontal plane, and four surfaces with smaller area perpendicular to the horizontal plane. Since the inlet and outlet are required to allow the fibrous reinforcing material and the peel ply to be drawn through, it is not suitable to arrange injection ports on the sides having the inlet and the outlet. Therefore, preferably, at least two injection ports are arranged respectively on the two sides of the infiltration box, which are perpendicular to the horizontal plane and are also perpendicular to the sides with the inlet and the outlet of the infiltration box.

The second aspect of the present invention is to provide a device used in the aforementioned method for preparing a pultruded polyurethane composite of the present invention, comprising at least a drying unit (22). The drying unit (22) is provided with an inlet (22a) and an outlet (22b), through which the peel ply (2) passes. The infiltration box (5) includes an inlet (5a) and an outlet (5b). The upper surface, side surface or other surfaces of the drying unit (22) has at least one hole (22ka) or at least one pipeline (22kg) connected to a collector. The hole can help dissipate heat, cool down, or discharge moisture.

Preferably, the device comprises two drying units (22, 22'). The two drying units (22, 22') include an inlet (22a, 22'a) and an outlet (22b, 22'b) respectively.

Preferably, the device further comprises an injection unit (4) and an infiltration box (5). The infiltration box (5) includes an inlet (5a) and an outlet (5b). The outlets (22b, 22'b) of the drying units are arranged respectively close to or tight with the inlet (5a) of the infiltration box (5) in the pultrusion direction.

Preferably, the drying unit (22) includes two heating layers (22m, 22n) of a two-layer sandwich heater. During drying by heating, the peel ply (2) is located between the two heating layers (22m, 22n).

Preferably, the drying unit (22) is composed of two hot pressing rollers (22i, 22j). During drying by heating, the peel ply (2) is located between the two hot pressing rollers (22i, 22j). An electric heating wire is arranged in each hot pressing roller to heat up the hot pressing roller, wherein the temperature is the preset temperature for drying, so that the peel ply is quickly dried when it passes between the two hot pressing rollers.

Preferably, the device further comprises a peel ply container (2K). The peel ply container (2K) includes a spool for winding and unwinding the peel ply. The shape of the peel ply container (2K) is preferably cylindrical. The peel ply container (2K) can simultaneously have a drying function to dry the peel ply (2).

Preferably, the drying unit (22) can be used as a peel ply container (22C) at the same time. The drying unit (22) includes a spool for winding and unwinding the peel ply and can dry the peel ply (2) as the peel ply is placed in it, and can also draw the peel ply out from it.

Preferably, the cross-sectional shape of the drying unit (22, 22') is selected from rectangle, square and ellipse.

Preferably, the device further includes at least a cooling unit (33).

Preferably, at least an insulation component (G) is further provided between the drying unit (22) and the cooling unit (33).

Preferably, the drying unit (22) is at least a drying box (22Y). The drying box (22Y) is provided with an inlet (22Ya) and an outlet (22Yb), through which the peel ply (2) can pass.

Preferably, the drying box (22Y) includes a heating part (22Ym), a cooling part (22Yn) and an insulation component (22YG) arranged between the heating part (22Ym) and the cooling part (22Yn).

Preferably, the at least a peel ply (2) comprises two peel plies (2, 2'). The drying refers to drying of the two peel plies respectively by two drying units (22, 22').

Preferably, the cross-sectional shape of the drying unit (22, 22') is selected from rectangle, square, ellipse and circle.

Preferably, the length of the drying unit (22, 22') is of 0.05-5 m, preferably 0.3-2 m.

Preferably, the cooling refers to cooling of the dried peel plies (2, 2') respectively by two cooling units (33, 33'). The two cooling units (33, 33') include an inlet (33a, 33'a) and an outlet (33b, 33'b) respectively. The inlets (33a, 33'a) of the cooling units are connected with the two insulation components (22 YG, 22' YG) respectively.

Preferably, the outlet (33b, 33'b) of the cooling unit is tightly connected with the inlet (5a) of the infiltration box in the pultrusion direction. The outlet of the cooling unit is tightly connected with the inlet of the infiltration box with a very small distance, so that the contact with the air moisture can be avoided.

Preferably, the drying unit (22), the insulation component (G), the cooling unit (33) and the infiltration box (5) are connected in sequence along the pultrusion direction.

Unless defined otherwise, all technical and scientific terms used herein have the same meaning as they are generally understood by those skilled in the art of the present invention. When definitions of the terms in this specification conflict with the meanings generally understood by those skilled in the art of the present invention, the definitions described herein shall apply.

The present invention is described below using the examples by way of illustration.

### Description of drawings

The present invention will now be illustrated with reference to the accompanying drawings.
Figure 1 shows a schematic view of the mold and the technical process in the method for preparing a pultruded polyurethane composite by the pultrusion process according to a preferable embodiment of the present invention, wherein 1 represents the fibrous reinforcing material, 2 represents the peel ply, 3 represents the preforming plate, 4 represents the injection unit, 5 represents the infiltration box, 6 represents the mold, 7 represents the profile/the pultruded polyurethane composite, 8 represents a clamping unit, 22 and 22' represent drying units.
Figure 2 shows a preferable example of the drying unit, a sandwich heater, wherein 2 represents a peel ply, 22m and 22n respectively represent two heating layers of the sandwich heater, and 2K represents a peel ply container.
Figure 3 shows a preferable example of the drying unit, heating rollers, wherein 22i and 22j respectively represent two heating rollers, and 2K represents a peel ply container/holder.

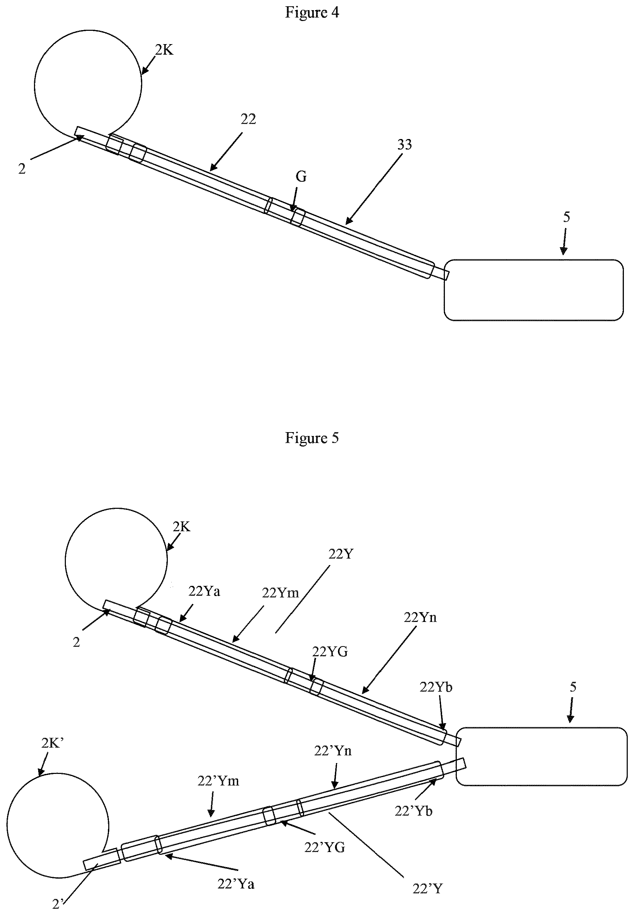

Figure 4 shows a preferable example of the drying unit including a drying unit, an insulation component and a cooling unit in their positional relationship, wherein 2 represents a peel ply, 5 represents a infiltration box, 22 represents the drying unit, G represents the insulation component, 33 represents the cooling unit, 2K represents a peel ply container/holder.
Figure 5 shows the heating part, the insulation component and the cooling part arranged in their positional relationship in the preferable drying box, wherein 2, 2' represent peel plies; 5 represents an infiltration box; 22Y, 22'Y represent drying units or drying boxes; 22Ya, 22'Ya represent the inlets of the drying box, through which the peel ply (2) can pass; 22Yb, 22'Yb represent the outlets; 22Ym, 22'Ym represent the heating parts of the drying boxes 22Y, 22'Y respectively; 22YG, 22'YG represent the insulation components; 22Yn and 22'Yn represent the cooling parts of the drying boxs; and 2K and 2K' represent the peel ply containers/holders.
Fig. 6 shows the positional relationship of the infiltration box, the injection unit and the peel ply that are preferable in the present invention, wherein 2, 2 represent the peel plies (for the sake of simplicity, the fibrous reinforcing material between the two peel plies is not shown); 4 represents the injection unit; 4a and 4b represent the injection ports; 5 represents the infiltration box; 5a represents the inlet of the infiltration box; 5b represents the outlet of the infiltration box; 5m and 5n represent the two opposite sides of the infiltration box (5); 4i represents the injection channel; and X represents the distance between the injection unit (4) and the inlet (5a) of the infiltration box in the pultrusion direction.

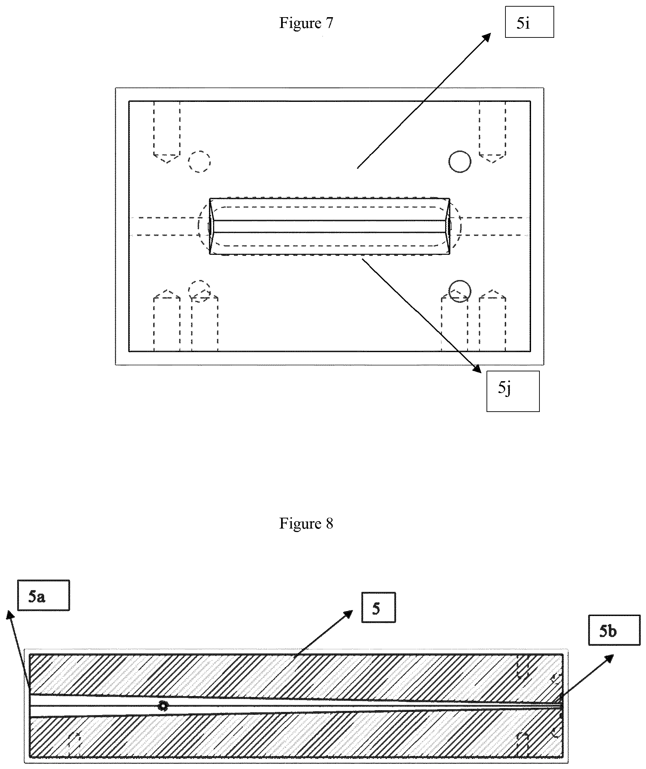

Fig. 7 shows a front view of the infiltration box, which is preferable in the present invention, wherein 5i and 5j represent the upper and lower sides of the infiltration box, respectively.
Figure 8 shows a cross-sectional view of the infiltration box, which is preferable in the present invention, wherein 5 represents the infiltration box, 5a represents the inlet of the infiltration box, and 5b represents the outlet of the infiltration box.

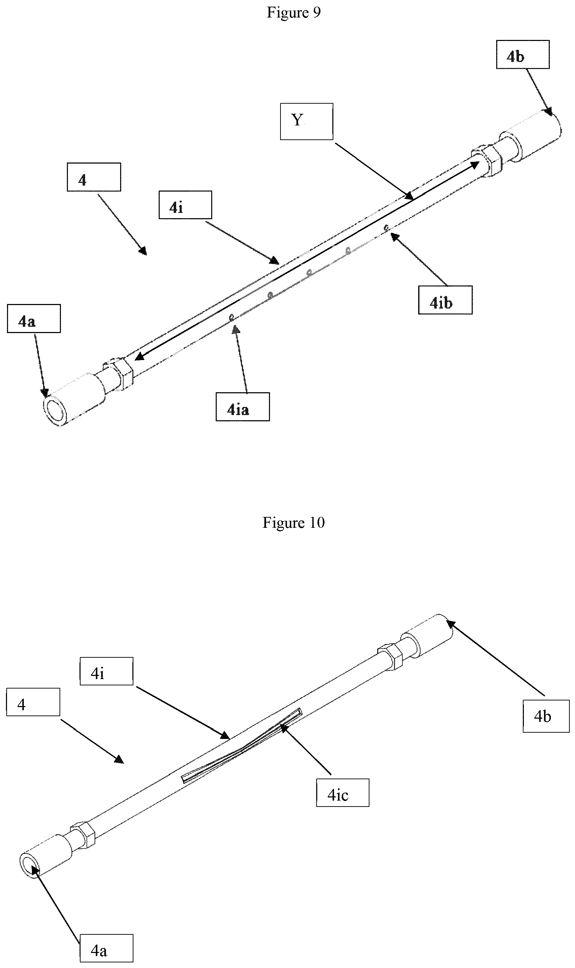

Figure 9 shows a schematic view of an injection unit comprising an injection channel, which is preferable in the present invention, wherein 4 represents the injection unit; 4a and 4b represent the injection ports; 4i represents the injection channel; 4ia and 4ib represent the openings on the injection channel.
Figure 10 shows a schematic view of another injection unit comprising an injection channel, which is preferable in the present invention, wherein 4 represents the injection unit; 4a and 4b represent the injection ports; 4i represents the injection channel; and 4ic represents the slit on the injection channel.

### Examples

Description of tested performance parameters in the examples of the present application: Functionality refers to a value determined according to the formula in the industry: functionality = hydroxyl value * molecular weight / 56100; wherein the molecular weight is determined by GPC high performance liquid chromatography;

Isocyanate index refers to a value calculated by the following formula: $isocyanate index \left(%\right) = \frac{Moles of isocyanate groups \left(NCO groups\right) in component A}{Moles of groups reactive toward isocyanate groups in component B} \times 100 %$

NCO content refers to the content of NCO groups in the system, measured according to GB/T 12009.4-2016.

Pultrusion rate/speed, the speed at which the fibrous reinforcing material is drawn through the mold, refers to the length of the pultruded fibrous reinforcing material passing through the mold per minute, that is, the length of the pultruded product produced per minute. In the test, the length of the pultruded fibrous reinforcing material is measured by a ruler and then divided by the time measured by a speed sensor or a stopwatch, resulting in the length passing through the mold in per time unit, that is, the pultrusion rate/speed.

Curing time refers to the time from when the component A and B of the reaction system are mixed until the mixture is cured.

Gel time refers to the time from when the component A and B of the reaction system are mixed until the viscosity reaches a certain value (for example, about 10000 mPa.s). The gel time of the present disclosure is tested using a gel tester. In the test, component A and B are mixed evenly, and then placed in the gel tester. The time from pressing the start button until the gel tester stops working is recorded as the gel time.

### Source and description of raw materials

**Table 1 - List of raw materials**

| Name of raw materials/device | Specification/type | Supplier |
|---|---|---|
| Isocyanate | Desmodur 58IF07C | Covestro Polymers (China) Co., Ltd. |
| Polyol component 1 | Baydur 18BD228 | Covestro Polymers (China) Co., Ltd. |
| Polyol component 2 | Baydur 18BD230 | Covestro Polymers (China) Co., Ltd. |
| Glass fiber | PS 4100-2400Tex | Owens Corning Composites (China) Co., Ltd. |
| Carbon fiber | 1RW 40 / 50L. A3750 tex | Mitsubishi Pyrofil TOW |
| Pultrusion device | Crawler pultrusion machine for composites | Nanjing Nuoertai Composite Material Equipment Company |
| Injection machine | Hydraulic Mini Link System | Magnum Venus Products |
| Peel ply | Nylon 66 peel ply 105g/m² | Nanfang Chemical Fiber Co., Ltd |
| Drying unit | Drying unit with two heating plates | Accessories purchased from relevant markets |
| Peel ply holder | Cylindrical holder with spool | purchased from relevant markets |

### Example 1:

The production of the glass fiber-reinforced pultruded polyurethane profile (also called sheet or plate) with peel ply is described by taking the production of a 3mm* 100mm flat plate as an example. In this example, the ratio of the cross-sectional area of the inlet to that of the outlet of the infiltration box was 7:1; the distance between the injection unit (4) and the inlet (5a) of the infiltration box in the pultrusion direction was 50mm; the width of the injection channel was 10mm; the diameter of the openings was 2mm; the length of the channel was 200mm, and the length of the slit was 50mm.

Firstly, the injection unit (4), the infiltration box (5) and the mold (6) were assembled and fixed on the pultrusion platform. Two peel plies (2, 2') were pulled out from the two peel ply holders (2K, 2K') respectively, and dried by the two drying units (22, 22') at a drying temperature of 180°C and a drying time of 0.5 minute. At the same time, 220 bundles of glass fibers (1) were pulled out from the creel. The two peel plies (2, 2') and the glass fibers (1) passed through the guide /preforming plate (3), the infiltration box (5) and the mold (6). Thereafter, they were drawn forward by the traction device until the glass fibers were all drawn smoothly. The peel ply (2) was close to the upper side (5i) of the infiltration box (5), while the peel ply (2') was close to the lower side (5j) of the infiltration box. The heating unit of the mold (6) was turned on. The mold temperature from the inlet to the outlet was controlled as follows: 80°C/180°C/190°C. Upon the temperature being stable, the injection machine was turned on. The isocyanate component and polyol component B (100 parts of polyol component 1: 4 parts of polyol component 2) were continuously pumped by the injection unit to the static mixing head at a weight ratio of 100: 130. After being mixed by the mixing head, the resin was injected into the injection channel via the injection ports (4a, 4b) on both sides (5m, 5n) of the infiltration box (5). The resin was evenly injected into the infiltration box via multiple openings on the injection channel, and filled the infiltration box completely (average injection speed of 110g/min). Thus, the glass fibers (1) and the peel plies (2) were fully immersed. The injection pressure in the infiltration box (5) was controlled at 0.1-15 bar. The glass fibers (1) and the peel plies (2, 2') immersed in the infiltration box (5) were continuously drawn through the mold (6) by the traction device 8 at a speed of 0.5m/min. After being pulled out from the mold, the plate was smooth and without dry yarns. When the resulting pultruded polyurethane composite/profile was knocked with a metal part at a distance of 1 meter away from the mold, there was no blister on the surfaces, which indicated that the drying, the infiltration and the curing was good.

Before the further processing of the resulting pultruded polyurethane composite/profile, the peel plies should be removed, so that a pultruded polyurethane composite/profile with the desired surfaces can be obtained.

### Example 2:

The production of the carbon fiber-reinforced pultruded polyurethane profile/sheet with peel ply is described by taking the production of a 3mm* 100mm flat plate as an example. **In** this example, the ratio of the cross-sectional area of the inlet to that of the outlet of the infiltration box was 7: 1; the distance between the injection unit (4) and the inlet (5a) of the infiltration box in the pultrusion direction was 50mm; the width of the injection channel was 10mm; the diameter of the openings was 2mm; the length of the channel was 200mm, and the length of the slit was 50mm.

Firstly, the injection unit (4), the infiltration box (5) and the mold (6) were assembled and fixed on the pultrusion platform. Two peel plies (2, 2') were pulled out from the two peel ply containers (2K, 2K') respectively, and dried by the two drying units (22, 22') at a drying temperature of 180°C and a drying time of 0.5 minute. At the same time, 140 bundles of carbon fibers (1) were pulled out from the creel. The two peel plies (2, 2') and the carbon fibers (1) passed through the guide /preforming plate (3), the infiltration box (5) and the mold (6). Thereafter, they were drawn forward by the traction device until the carbon fibers were all drawn smoothly. The peel ply (2) was close to the upper side (5i) of the infiltration box (5), while the peel ply (2') was close to the lower side (5j) of the infiltration box. The heating unit of the mold (6) was turned on. The mold temperature from the inlet to the outlet was controlled as follows: 80°C/180°C/190°C. Upon the temperature being stable, the injection machine was turned on. The isocyanate component and polyol component B (100 parts of polyol component 1: 4 parts of polyol component 2) were continuously pumped by the injection machine into the static mixing head at a weight ratio of 100: 130. After being mixed by the mixing head, the resin was injected into the injection channel via the injection ports (4a, 4b) on both sides (5m, 5n) of the infiltration box (5). The resin was evenly injected into the infiltration box via multiple openings on the injection channel, and filled the infiltration box completely (average injection speed of 110g/min). Thus, the carbon fibers (1) and the peel plies (2) were fully immersed. The injection pressure in the infiltration box (5) was controlled at 0.1-15 bar. The carbon fibers (1) and the peel plies (2, 2') immersed in the infiltration box (5) were continuously drawn through the mold (6) by the traction device 8 at a speed of 0.5m/min. After being pulled out from the mold, the plate was smooth and without dry yarns. When the resulting pultruded polyurethane composite/profile was knocked with a metal part at a distance of 1 meter away from the mold, it sounded clear and there was no blister on the surfaces, which indicated that the drying, the infiltration and the curing was good.

Before the further processing of the resulting pultruded polyurethane composite/profile, the peel plies should be removed, so that a pultruded polyurethane composite/profile with the desired surfaces can be obtained.

The specific surface conditions of the prepared pultruded polyurethane composite/profile are shown in Table 1.

### Comparative Examples 1 and 2

Except for the absence of a drying step for the peel plies, Comparative Example 1 applied the same raw materials and the same process as Example 1 and Comparative Example 2 applied the same raw materials and the same process as Example 2 to prepare the pultruded polyurethane composites. The surface conditions of the plates/profiles prepared in Examples 1 and 2 and Comparative Examples 1 and 2 are shown in Table 1.

**Table 1 - Results of Examples 1 and 2 and Comparative Examples 1 and 2**

| Comp. Ex. 1 | Comp. Ex. 2 | Ex. 1 | Ex. 2 |
|---|---|---|---|
| Glass fibers | Carbon fibers | Glass fibers | Carbon fibers |
| Without drying step for peel plies | Without drying step for peel plies | With drying by the drying unit | With drying by the drying unit |
| With blisters (bumps) on the surfaces of the profile | With blisters (bumps) on the surfaces of the profile | Without Blisters (bumps) on the surfaces of the profile | Without Blisters (bumps) on the surfaces of the profile |

It can be seen from the experimental results of above examples 1 and 2 that the method for preparing a pultruded polyurethane composite of the present invention including drying of peel plies by the drying unit can provide a pultruded polyurethane composite without blisters on the surfaces and with good infiltration and curing. Whether glass fibers or carbon fibers are used, a pultruded polyurethane composite with satisfactory surfaces and high quality can be provided. In addition, the polyurethane composition of the present disclosure has a shorter curing time and a longer gel time, so that it is better and more flexible (for example in terms of infiltration and molding for a longer time) to be used for preparing pultruded polyurethane composites, especially large-scaled pultruded polyurethane composites. The methods in the prior art as described in Comparative Examples 1 and 2 contained no suitable drying step. Thus, the pultruded polyurethane composite had bumps on the surfaces and there were blisters between the peel ply and the profile, which was not qualified.

While the present invention has been described in detail as above, it is understood that the detailed description is only exemplary. In addition to the contents explicitly defined by the claims, various changes can be made by those skilled in the art without departing from the scope of the present invention.

## Claims

1. A method for preparing a pultruded polyurethane composite, comprising:
covering at least a part of at least a fibrous reinforcing material (1) with at least a peel ply (2);
infiltrating the fibrous reinforcing material (1) with a polyurethane composition;
drawing the infiltrated fibrous reinforcing material (1) and the peel ply (2) through a mold (6), and
curing to obtain the pultruded polyurethane composite;
wherein the method further comprises drying the at least a peel ply (2) before or after covering at least a part of the at least a fibrous reinforcing material (1) with the at least a peel ply (2), and before infiltrating the fibrous reinforcing material (1) with a polyurethane composition.

2. The method according to claim 1, wherein the method further comprises drying the fibrous reinforcing material (1), preferably drying the peel ply (2) and the fibrous reinforcing material (1) together after covering at least a part of the at least a fibrous reinforcing material (1) with the at least a peel ply (2).

3. The method according to claim 1 or 2, wherein the drying is carried out by at least a drying unit (22).

4. The method according to any of claims 1 to 3 , wherein the method further comprises a step of cooling after drying.

5. The method according to claim 4, wherein the peel ply (2) passes through an insulation component (G, 22YG) after drying and before cooling.

6. The method according to claim 3, wherein the drying unit (22) is at least a drying box (22Y), which includes a heating part (22Ym), a cooling part (22Yn) and an insulation component (22YG) arranged between the heating part (22Ym) and the cooling part (22Yn).

7. The method according to claim 3, wherein the at least a peel ply (2) comprises two peel plies (2, 2'), and the drying refers to drying of the two peel plies respectively by two drying units (22, 22').

8. The method according to claim 4, wherein the cooling refers to cooling of the dried peel plies (2, 2') respectively by two cooling units (33, 33').

9. A device for use in the method for preparing a pultruded polyurethane composite according to any one of claims 1-8, comprising at least a drying unit (22), an injection unit (4) and an infiltration box (5).

10. The device according to claim 9, wherein the device further comprises at least a cooling unit (33).

11. The device according to claim 9 or 10, wherein an insulation component (G) is arranged between the drying unit (22) and the cooling unit (33).

12. The device according to claim 9 or 10, wherein the at least a peel ply (2) comprises two peel plies (2, 2'), and the drying refers to drying of the two peel plies (2, 2') respectively by two drying units (22, 22').

13. The device according to claim 9 or 10, wherein the drying unit (22) is at least a drying box (22Y), which includes a heating part (22Ym), a cooling part (22Yn) and an insulation component (22YG) arranged between the heating part (22Ym) and the cooling part (22Yn).

## Patentansprüche

1. Verfahren zum Herstellen eines pultrudierten Polyurethanverbundstoffs, umfassend:
Bedecken mindestens eines Teils mindestens eines faserförmigen Verstärkungsmaterials (1) mit mindestens einer Abreißlage (2);
Imprägnieren des faserförmigen Verstärkungsmaterials (1) mit einer Polyurethanzusammensetzung;
Ziehen des imprägnierten faserförmigen Verstärkungsmaterials (1) und der Abreißlage (2) durch eine Form (6) und
Aushärten, um den pultrudierten Polyurethanverbundstoff zu erhalten;
wobei das Verfahren ferner umfasst: Trocknen der mindestens einen Abreißlage (2) vor oder nach dem Bedecken mindestens eines Teils des mindestens einen faserförmigen Verstärkungsmaterials (1) mit der mindestens einen Abreißlage (2), und vor dem Imprägnieren des faserförmigen Verstärkungsmaterials (1) mit einer Polyurethanzusammensetzung.

2. Verfahren nach Anspruch 1, wobei das Verfahren ferner umfasst: Trocknen des faserförmigen Verstärkungsmaterials (1), vorzugsweise Trocknen der Abreißlage (2) und des faserförmigen Verstärkungsmaterials (1) gemeinsam nach dem Bedecken mindestens eines Teils des mindestens einen faserförmigen Verstärkungsmaterials (1) mit der mindestens einen Abreißlage (2).

3. Verfahren nach Anspruch 1 oder 2, wobei das Trocknen durch mindestens eine Trocknungseinheit (22) durchgeführt wird.

4. Verfahren nach einem der Ansprüche 1 bis 3, wobei das Verfahren ferner einen Schritt des Abkühlens nach dem Trocknen umfasst.

5. Verfahren nach Anspruch 4, wobei die Abreißlage (2) nach dem Trocknen und vor dem Abkühlen durch eine Isolationskomponente (G, 22YG) hindurchtritt.

6. Verfahren nach Anspruch 3, wobei die Trocknungseinheit (22) mindestens ein Trocknungskasten (22Y) ist, der einen Heizteil (22Ym), einen Kühlteil (22Yn) und eine Isolationskomponente (22YG), die zwischen dem Heizteil (22Ym) und dem Kühlteil (22Yn) angeordnet ist, beinhaltet.

7. Verfahren nach Anspruch 3, wobei die mindestens eine Abreißlage (2) zwei Abreißlagen (2, 2') umfasst und sich das Trocknen auf Trocknen der beiden Abreißlagen jeweils durch zwei Trocknungseinheiten (22, 22') bezieht.

8. Verfahren nach Anspruch 4, wobei sich das Kühlen auf das Kühlen der getrockneten Abreißlagen (2, 2') jeweils durch zwei Kühleinheiten (33, 33') bezieht.

9. Vorrichtung zur Verwendung in dem Verfahren zur Herstellung eines pultrudierten Polyurethanverbundstoffs nach einem der Ansprüche 1-8, umfassend mindestens eine Trocknungseinheit (22), eine Injektionseinheit (4) und einen Infiltrationskasten (5).

10. Vorrichtung nach Anspruch 9, wobei die Vorrichtung ferner mindestens eine Kühleinheit (33) umfasst.

11. Vorrichtung nach Anspruch 9 oder 10, wobei eine Isolationskomponente (G) zwischen der Trocknungseinheit (22) und der Kühleinheit (33) angeordnet ist.

12. Vorrichtung nach Anspruch 9 oder 10, wobei die mindestens eine Abreißlage (2) zwei Abreißlagen (2, 2') umfasst und sich das Trocknen auf Trocknen der beiden Abreißlagen (2, 2') jeweils durch zwei Trocknungseinheiten (22, 22') bezieht.

13. Vorrichtung nach Anspruch 9 oder 10, wobei die Trocknungseinheit (22) mindestens ein Trocknungskasten (22Y) ist, der einen Heizteil (22Ym), einen Kühlteil (22Yn) und eine Isolationskomponente (22YG), die zwischen dem Heizteil (22Ym) und dem Kühlteil (22Yn) angeordnet ist, beinhaltet.

## Revendications

1. Procédé de préparation d'un composite de polyuréthane pultrudé, comprenant :
le recouvrement d'au moins une partie d'au moins un matériau de renforcement fibreux (1) avec au moins une couche pelable (2) ;
l'infiltration du matériau de renforcement fibreux (1) avec une composition de polyuréthane ;
l'étirage du matériau de renforcement fibreux (1) infiltré et de la couche pelable (2) à travers un moule (6), et
le durcissement pour obtenir le composite de polyuréthane pultrudé ;
dans lequel le procédé comprend en outre le séchage de la ou des couches pelables (2) avant ou après le recouvrement d'au moins une partie de la ou des matériau de renforcement fibreux (1) avec la ou les couches pelables (2), et avant l'infiltration du matériau de renforcement fibreux (1) avec une composition de polyuréthane.

2. Procédé selon la revendication 1, dans lequel le procédé comprend en outre le séchage du matériau de renforcement fibreux (1), de préférence le séchage de la couche pelable (2) et du matériau de renforcement fibreux (1) ensemble après avoir recouvert au moins une partie de l'au moins un matériau de renforcement fibreux (1) avec la ou les couches pelables (2).

3. Procédé selon la revendication 1 ou 2, dans lequel le séchage est effectué par au moins une unité de séchage (22).

4. Procédé selon l'une quelconque des revendications 1 à 3, dans lequel le procédé comprend en outre une étape de refroidissement après séchage.

5. Procédé selon la revendication 4, dans lequel la couche pelable (2) passe à travers un composant d'isolation (G, 22YG) après séchage et avant refroidissement.

6. Procédé selon la revendication 3, dans lequel l'unité de séchage (22) est au moins une boîte de séchage (22Y), qui comprend une partie chauffante (22Ym), une partie de refroidissement (22Yn) et un composant d'isolation (22YG) disposé entre la partie chauffante (22Ym) et la partie de refroidissement (22Yn).

7. Procédé selon la revendication 3, dans lequel la ou les couches pelables (2) comprennent deux couches pelables (2, 2'), et le séchage se rapporte au séchage des deux couches pelables respectivement par deux unités de séchage (22, 22').

8. Procédé selon la revendication 4, dans lequel le refroidissement se rapporte au refroidissement des couches pelables séchées (2, 2') respectivement par deux unités de refroidissement (33, 33').

9. Dispositif destiné à être utilisé dans le procédé de préparation d'un composite de polyuréthane pultrudé selon l'une quelconque des revendications 1 à 8, comprenant au moins une unité de séchage (22), une unité d'injection (4) et une boîte d'infiltration (5).

10. Dispositif selon la revendication 9, dans lequel le dispositif comprend en outre au moins une unité de refroidissement (33).

11. Dispositif selon la revendication 9 ou 10, dans lequel un composant d'isolation (G) est disposé entre l'unité de séchage (22) et l'unité de refroidissement (33).

12. Dispositif selon la revendication 9 ou 10, dans lequel la ou les couches pelables (2) comprennent deux couches pelables (2, 2'), et le séchage se rapporte au séchage des deux couches pelables (2, 2') respectivement par deux unités de séchage (22, 22').

13. Dispositif selon la revendication 9 ou 10, dans lequel l'unité de séchage (22) est au moins une boîte de séchage (22Y), qui comprend une partie chauffante (22Ym), une partie de refroidissement (22Yn) et un composant d'isolation (22YG) disposé entre la partie chauffante (22Ym) et la partie de refroidissement (22Yn).
